(19) **Europäisches Patentamt**
**European Patent Office**
**Office européen des brevets**

(11) **EP 2 137 043 B1**

(12) **FASCICULE DE BREVET EUROPEEN**

(45) Date de publication et mention
de la délivrance du brevet:
**29.06.2016 Bulletin 2016/26**

(21) Numéro de dépôt: **08788107.4**

(22) Date de dépôt: **02.04.2008**

(51) Int Cl.:
***B60W 30/18*** *(2012.01)*     ***B60T 7/12*** *(2006.01)*

(86) Numéro de dépôt international:
**PCT/FR2008/050582**

(87) Numéro de publication internationale:
**WO 2008/139090 (20.11.2008 Gazette 2008/47)**

(54) **PROCEDE D'ASSISTANCE AUX MANOEUVRES EN COTE POUR UN VEHICULE**

**VERFAHREN ZUR UNTERSTÜTZUNG BEI FAHRMANÖVERN EINES FAHRZEUGS AN EINER STEIGUNG**

**HILL START ASSISTANCE METHOD FOR MOTOR VEHICLES**

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.04.2007 FR 0754563**

(43) Date de publication de la demande:
**30.12.2009 Bulletin 2009/53**

(73) Titulaire: **Renault SAS**
**92100 Boulogne Billancourt (FR)**

(72) Inventeurs:
• **MALLET, Mickaël**
**F-78180 Montigny-le-Bretonneux (FR)**
• **POTHIN, Richard**
**F-78760 Jouars-Pontchartrain (FR)**

(56) Documents cités:
**DE-A1- 10 063 061**     **DE-A1- 19 950 034**
**DE-A1- 19 950 162**     **DE-A1-102004 045 434**
**DE-A1-102005 011 032**

**Description**

La présente invention concerne un dispositif d'assistance aux manoeuvres en côte pour un véhicule.

Il concerne plus particulièrement un dispositif d'aide au démarrage en côte pour un véhicule automobile à boîte de vitesse manuelle, fondé sur un circuit hydraulique de freinage.

Sur les véhicules actuels, le démarrage en côte (ou décollage) est source de stress pour l'usager du véhicule, qui cherche autant que possible à limiter le recul de son véhicule.

Généralement, il doit déplacer le plus vite possible son pied de la pédale de frein à la pédale d'accélérateur, de telle sorte que le véhicule n'ait pas le temps de descendre la pente.

On connaît des solutions pour éviter cette source de stress.

Le document DE 102 42 122 propose un procédé dans lequel le desserrage des freins est réalisé en fonction du couple transmis à l'embrayage. Pour cela, il détermine dans un premier temps, la force longitudinale exercée sur les roues et la force d'inertie exercée sur le véhicule lorsque celui-ci est à l'arrêt, puis, dans un second temps, après avoir estimé le couple moteur, il en déduit le couple instantané transmis à l'embrayage. Si le couple transmis ainsi calculé est suffisant pour compenser l'effort longitudinal dû à la pente, alors le dispositif desserre les freins.

Ce procédé présente toutefois l'inconvénient d'être sensible au vieillissement et à l'usure de l'embrayage.

Le document EP 1 410 940 propose quant à lui un procédé dans lequel le freinage est électriquement contrôlé pour maintenir une pression demandée sur les étriers des roues, sans que l'opérateur ne joue sur la pédale de frein, afin d'éviter le déplacement du véhicule, et ce jusqu'à ce que la pédale d'embrayage dépasse un seuil déterminé.

Le document DE 196 21 628 présente un dispositif dans lequel, lorsque la pédale de frein est tout d'abord actionnée, le véhicule étant immobilisé, une force de freinage est maintenue au niveau d'au moins une roue du véhicule indépendamment de la course d'actionnement de la pédale. Lorsque la pédale de frein est ensuite relâchée, la force de freinage est réduite au niveau de ladite roue au moins, ce qui permet un démarrage en douceur. Pour la mise en oeuvre de ce procédé, les électrovannes du système de freinage sont directement commandées par le dispositif.

Enfin, le document WO 2004/103785 décrit un procédé d'aide au démarrage en côte, dans lequel on utilise un capteur de tangage pour désactiver une fonction de type « hill-holder » (c'est-à-dire de type « maintien en côte »). Le véhicule est maintenu en position jusqu'à ce que des conditions de décollage déterminées soient vérifiées, et qu'un seuil d'évolution du tangage soit dépassé. Toutefois, la mesure de l'angle de tangage est très sensible au bruit, dû par exemple aux mouvements des passagers du véhicule. Par ailleurs, le capteur d'angle de tangage présente un temps de réponse élevé, ce qui rend difficile un desserrage optimal des freins lors du décollage. De même les documents DE 10 2005 et DE10063061 décrivent des procédés d'aide au démarrage en côte.

Pour éviter la source de stress liée au démarrage en côte, l'invention a donc pour but de proposer un nouveau procédé pour améliorer la fonction d'assistance aux manoeuvres en côte d'un véhicule (en anglais : fonction HSA pour Hill Start Assistant).

Un autre objet de l'invention est de proposer un procédé d'assistance aux manoeuvres en côte, dans lequel le moment du desserrage des freins est optimal, de sorte que le véhicule est libéré sans recul ni retenue.

Un autre but de l'invention est de proposer un procédé d'assistance aux manoeuvres en côte présentant une sûreté de fonctionnement accrue, sans freinage intempestif.

Enfin, un objectif de l'invention est de proposer un procédé d'assistance aux manoeuvres en côte peu sensible au vieillissement, à l'usure et aux dispersions de fabrication de l'embrayage.

Pour cela, l'invention propose un procédé d'assistance d'un usager pour les manoeuvres en côte de son véhicule comprenant un système de freinage et une commande électronique de freinage, équipé d'au moins un capteur de pression maître-cylindre, et dont la pression sur chaque étrier du véhicule peut être contrôlée, le procédé comprenant les étapes consistant à :

   (a) estimer le couple transmis par l'embrayage,
   (b) enregistrer une information correspondant à la valeur de la pression maître-cylindre résultant de l'actionnement par un usager de la pédale de frein,
   (c) mettre à jour l'information enregistrée correspondant à la valeur de la pression maître-cylindre, lorsque l'usager ré-actionne la pédale de frein en appuyant davantage dessus ou en la relâchant partiellement,

caractérisé en ce que lorsque l'usager relâche complètement la pédale de frein, le système de freinage maintient, pendant une durée déterminée, la pression sur les étriers en fonction d'une consigne de pression égale à la valeur de la dernière information enregistrée.

Certains aspects préférés mais non limitatifs du procédé selon l'invention sont les suivants :

• la durée déterminée est égale à la durée la plus petite entre :

   ◦ la durée de temporisation définie par le système,
   ◦ la durée nécessaire pour que des conditions de décollage déterminées soient réunies,

- une condition de décollage est qu'un rapport de vitesse soit engagé,
- une condition de décollage est que le couple transmis par l'embrayage soit supérieur au couple seuil de décollage,
- une condition de décollage est que le rapport de vitesse engagé soit cohérent avec la pente,
- la vitesse de desserrage est paramétrable,
- le système de freinage est un bloc hydraulique de type ESP (« Electronic Stability Program », pour contrôle dynamique de stabilité).

Selon un deuxième aspect de l'invention, on propose un dispositif d'assistance d'un usager au démarrage en côte d'un véhicule comprenant :

- un système de freinage alimenté par une force extérieure et une commande électronique de freinage, équipé d'au moins un capteur de pression maître-cylindre, la pression sur chaque étrier du véhicule pouvant être contrôlée,
- des moyens pour estimer le couple transmis à l'embrayage,
- des moyens pour enregistrer la valeur de la pression maître-cylindre résultant de l'actionnement par un usager de la pédale de frein, et, le cas échéant, mettre à jour la valeur de la pression maître-cylindre enregistrée,

caractérisé en ce que, lorsque l'usager relâche complètement la pédale de frein, le dispositif maintient, pendant une durée déterminée, la pression sur les étriers en fonction d'une pression de consigne égale à la valeur maximale enregistrée de la pression maître-cylindre.

Certains aspects préférés mais non limitatifs du dispositif selon l'invention sont les suivants :

- il ne pilote la pression aux étriers que lorsque celle-ci est inférieure à la pression maître-cylindre enregistrée par les moyens d'enregistrement au cours d'un procédé selon l'invention.

L'invention propose également un véhicule comprenant un système de freinage et une commande électronique de freinage, équipé d'au moins un capteur de pression maître-cylindre, la pression sur chaque étrier du véhicule pouvant être contrôlée, caractérisé en ce qu'il comprend un dispositif d'assistance selon l'invention.

D'autres caractéristiques, buts et avantages de la présente invention apparaîtront à la lecture de la description détaillée qui va suivre, au regard des dessins annexés, donnés à titre d'exemples non limitatifs et sur lesquels :

- La figure 1 présente un automate de la fonction HSA selon l'invention,
- La figure 2 illustre le principe de fonctionnement de l'automate qui estime le couple transmis aux roues d'un véhicule mis en oeuvre dans l'invention,
- La figure 3 présente l'architecture fonctionnelle d'un véhicule sur lequel est mis en oeuvre le procédé selon l'invention.

Un véhicule équipé d'un dispositif d'assistance au démarrage en côte mettant un oeuvre le procédé selon l'invention, comprend un groupe motopropulseur, un Frein de Stationnement Automatique 5, un bus 4, sur lequel transitent des signaux provenant du reste du véhicule 6, et un calculateur de contrôle du groupe motopropulseur. Le bus 4 est de préférence un bus de la norme CAN™ (Control Area Network, pour réseau de zone de commande). Le groupe motopropulseur est composé d'un moteur thermique couplé à des roues motrices par un dispositif de transmission comportant une boîte de vitesse et un embrayage, qui sont commandés par l'usager au moyen d'une pédale d'embrayage. Dans d'autres modes de réalisation, le groupe motopropulseur peut comporter une ou plusieurs machines électriques, avec ou sans moteur thermique.

Le dispositif d'assistance au démarrage en côte coopère avec un calculateur 1 de contrôle du Frein de Stationnement Automatique 5, qui est également connecté au bus 4. Le calculateur 1 est équipé, ainsi qu'il est connu, d'un moyen pour produire des ordres de serrage et de desserrage du Frein de Stationnement Automatique 5, lesdits ordres du Frein 5 étant générés sur une ligne de connexion au Frein de Stationnement Automatique 5 proprement dit.

Le cas échéant, le calculateur 1 est également équipé d'un moyen pour transmettre au bus 4 des informations d'état du Frein de Stationnement Automatique 5.

Le calculateur 1 de contrôle du Frein de Stationnement Automatique 5 est connecté par une ligne convenable à un capteur de pente 2. Lorsque le véhicule se trouve à l'arrêt dans une pente, le capteur de pente 2 délivre un signal représentatif de l'inclinaison de la pente dans laquelle est arrêté le véhicule.

Lorsque le calculateur 1 de contrôle du Frein de Stationnement Automatique 5 produit un ordre de serrage, les parties mobiles des freins viennent serrer les disques de sorte que le Frein de Stationnement Automatique 5 soit serré.

Inversement, lorsque le calculateur 1 de contrôle du Frein de Stationnement Automatique 5 produit un ordre de desserrage du Frein de Stationnement Automatique 5, les parties mobiles des freins sont relâchées.

Par ailleurs, en situation de démarrage (quelle que soit l'inclinaison de la pente), le groupe motopropulseur du véhicule produit un couple qui est ou non transmis aux roues, selon que l'embrayage est actif ou non, et selon une proportion qui dépend de la position angulaire de la pédale d'embrayage.

Le procédé selon l'invention se fonde sur l'estimation du couple transmis $C_T$ par l'embrayage, obtenu à partir de la courbe de frottement de l'embrayage, donnant le couple transmis $C_T$ en fonction de la position an-

gulaire $\theta_{emb}$ de la pédale d'embrayage.

Pour décoller, un véhicule stationné dans une pente doit vaincre l'effet de la pente, qui est dû à la force d'attraction de la terre.

Cet effet est fonction de l'inclinaison de la pente et de la masse du véhicule, et vaut

$$m.g.sin(\theta_{pente})$$

où

- $m$ est la masse du véhicule,
- $g$ est la gravité,
- $\theta_{pente}$ est l'inclinaison de la pente.

Le couple minimum $C_{T\_seuil}$ qu'il faut transmettre à l'embrayage, par l'intermédiaire de la chaîne cinématique de la roue, pour permettre au véhicule de décoller (c'est-à-dire de démarrer dans la pente), doit donc être au moins égal à

$$C_{T\_seuil} = m.g.sin(\theta_{pente}).r(b).\rho_{roues}$$

où

- $r(b)$ est le rapport de vitesse engagé, correspondant à la position b du levier de vitesse,
- $\rho_{roues}$ est le rayon sous charge des roues du véhicule.

Ce couple $C_{T\_seuil}$ est le couple seuil de décollage. Il prend alors la valeur

- *0* si la caractéristique de la pente enregistrée ($\theta_{pente\_store}$) est positive ou nulle et que la marche arrière est engagée, ou si la pente enregistrée ($\theta_{pente\_store}$) est négative ou nulle et que la marche avant est engagée,
- $m.g.sin(\theta_{pente}).r(b).\rho_{roues}$, si la caractéristique de la pente enregistrée ($\theta_{pente\_store}$) est strictement positive et que la marche avant est engagée, ou si la pente enregistrée ($\theta_{pente\_store}$) est strictement négative et que la marche arrière est engagée.

Cette définition du couple seuil $C_{T\_seuil}$ de décollage permet donc de fixer ledit couple seuil $C_{T\_seuil}$ à zéro dans les cas où l'usager démarre dans le sens descendant de la pente. La stratégie que propose l'invention est fondée sur l'utilisation de cette relation.

En particulier, elle consiste à relâcher le Frein de Stationnement Automatique, en phase de démarrage à l'arrêt, lorsque le couple transmis $C_T$ à l'embrayage est supérieur au couple seuil $C_{T\_seuil}$ de décollage.

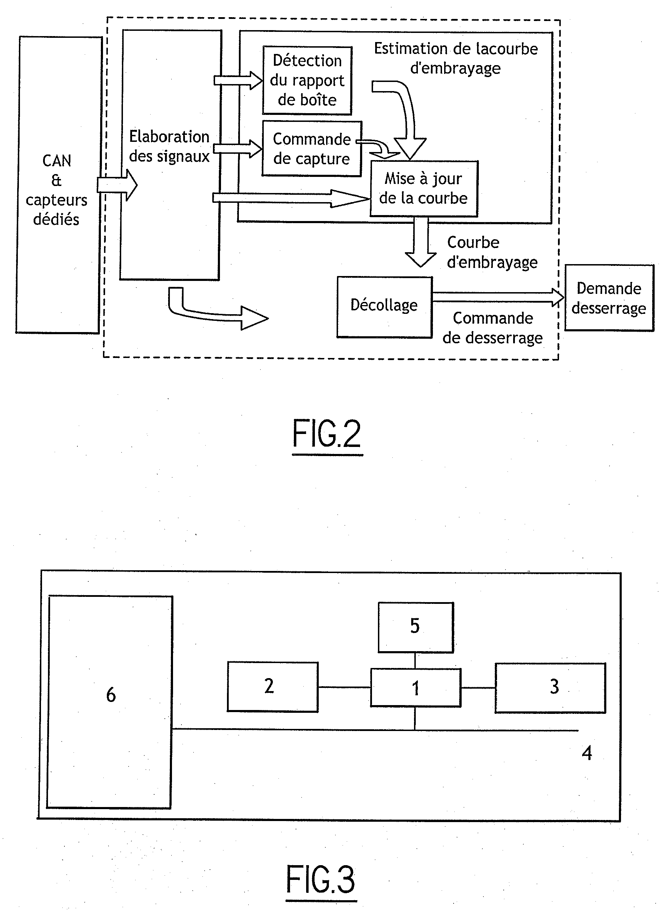

On suppose ici que le couple transmis $C_T$ est estimé par un automate tel que celui décrit par la demande de brevet français FR 2 828 450 (illustré par la figure 2 annexée, et que nous ne décrirons pas davantage dans la suite de la description).

La solution proposée par l'invention est un automate de la fonction HSA, qui se fonde sur l'estimation du couple transmis $C_T$ par l'embrayage, et met en oeuvre un système de freinage et une commande électronique de freinage, équipé d'au moins un capteur de pression maître-cylindre, qui pilote la pression au niveau de chaque étrier.

De préférence, le système de freinage est un bloc hydraulique de freinage de type ESP (« Electronic Stability Program », pour contrôle dynamique de stabilité) conventionnel.

Nous allons décrire à présent le fonctionnement détaillé de l'invention.

L'algorithme de fonctionnement de l'automate de la fonction HSA se décompose en trois éléments : les entrées et sorties de l'automate, la génération du signal de décollage, et la génération des consignes de pression de freinage.

Des moyens adaptés fournissent à l'automate, en entrée :

- une mesure de l'inclinaison de la pente $\theta_{pente}$ (déterminée par un capteur de pente 2),
- une mesure de la position angulaire de la pédale d'accélérateur $\theta_{acc}$ (déterminée par un capteur mesurant l'enfoncement de la pédale d'accélérateur)
- une mesure de la position angulaire de la pédale d'embrayage $\theta_{emb}$ (déterminée par un capteur mesurant l'enfoncement de la pédale d'embrayage)
- une mesure de la pression maître-cylindre $P_{mc}$, au moyen de capteurs de pression, qui permet de déterminer si l'usager désire ou non maintenir le véhicule immobile,
- une information sur le type de rapport de vitesse engagé (marche avant, vitesse engagée, marche arrière, neutre),
- une mesure de la vitesse du véhicule v,
- une mesure de la vitesse de rotation $\omega$ du moteur, témoignant de l'autonomie du moteur tournant,
- une estimation du couple transmis $C_T$ par apprentissage de la cartographie de l'embrayage (obtenue par le procédé décrit dans la demande de brevet français FR 2 828 450, à partir de l'inclinaison de la pente $\theta_{pente}$, de la position angulaire des pédales d'accélérateur $\theta_{acc}$ et d'embrayage $\theta_{emb}$ et de la masse m du véhicule).

La détermination du rapport de transmission et de la position du levier de vitesse (information sur le type de rapport de vitesse engagé) permettent d'ajuster la sensibilité du procédé d'assistance à l'intention de l'usager, et de déterminer par exemple si celui-ci veut réaliser un démarrage dans d'autres rapports de vitesses que le rapport de première.

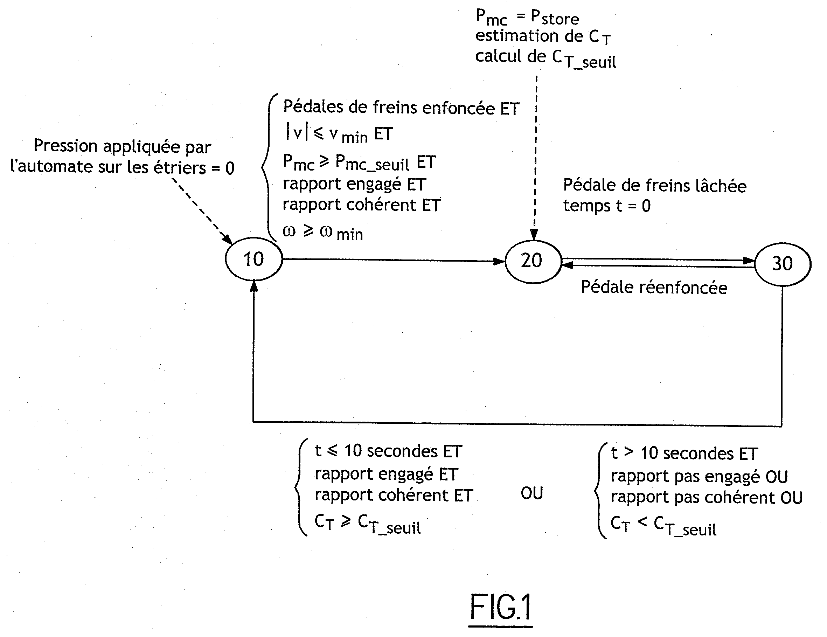

Le fonctionnement de l'automate est illustré sur la figure 1 annexée.

L'automate reste inactif, dans un état initial 10 (dans lequel soit le véhicule roule, soit il est à l'arrêt, moteur coupé), jusqu'à ce que des conditions d'activation soient simultanément remplies.

Ces conditions sont:

- la vitesse v du véhicule inférieure à une vitesse minimum $v_{min}$,
- la pression maître-cylindre $P_{mc}$ supérieure à une pression maître-cylindre seuil $P_{mc-seuil}$,
- d'engagement d'un rapport de vitesse,
- la vitesse de rotation du moteur $\omega$ supérieure à une vitesse de rotation minimum $\omega_{min}$,
- la cohérence entre le rapport de vitesse engagé et la pente (l'usager doit désirer monter la pente, que ce soit en marche avant ou en marche arrière).

L'automate passe alors dans un deuxième état 20, dans lequel il estime le couple transmis $C_T$ par l'embrayage et met en mémoire, grâce à des moyens d'enregistrement, une information $P_{store}$ correspondant à la valeur de la pression maître-cylindre de consigne $P_{mc}$.

Si l'usager du véhicule ré-actionne la pédale de frein, le moyen d'enregistrement met à jour la valeur de l'information $P_{store}$ sur la pression maître-cylindre maximale appliquée par l'usager.

Lorsque l'usager relâche complètement la pédale de frein, l'automate passe dans un troisième état 30.

La valeur de la pression maître-cylindre de consigne $P_{mc}$ théoriquement appliquée diminue, et devient alors inférieure à la valeur de l'information de pression enregistrée $P_{store}$.

Toutefois, l'automate commande au maître-cylindre de maintenir la pression de commande à une valeur égale à $P_{store}$, et déclenche automatiquement une temporisation.

Ce maintien automatique ne peut cependant se faire que pendant une durée prédéterminée pour des questions de sécurité, par exemple 10 secondes.

Si, à la fin de la temporisation, les conditions de décollage ne sont pas réunies, l'automate commande le relâchement de la pression au niveau des étriers et retourne à l'état initial 10.

Si les conditions de décollage sont réunies avant que la temporisation ne s'achève, l'automate commande le relâchement de la pression, et la pression appliquée sur les étriers diminue alors à une vitesse paramétrable jusqu'à devenir nulle, de sorte que le véhicule effectue un démarrage en côte en douceur. L'automate retourne ensuite à l'état initial 10, dans lequel il est à nouveau inactif.

Si l'usager enfonce à nouveau la pédale de frein avant la fin de la temporisation, l'automate retourne à l'état 20, et le moyen d'enregistrement remet à jour la valeur de la pression $P_{store}$ qu'il a en mémoire en lui attribuant une valeur égale à la nouvelle pression $P_{mc}$ maximale appliquée par l'usager.

Une pression correspondante est alors appliquée aux étriers en fonction de cette nouvelle consigne.

Les conditions de décollage sont au moins au nombre de trois. Il faut en particulier que :

- un rapport de vitesse soit engagé,
- le rapport de vitesse soit cohérent avec la pente : il faut qu'une vitesse soit engagée si l'usager effectue un démarrage en côte en marche avant, et que la marche arrière soit engagée si l'usager effectue un démarrage en côte en marche arrière.
- le couple transmis $C_T$ par l'embrayage soit supérieur au couple seuil $C_{T\_seuil}$ de décollage du véhicule.

Un avantage de l'utilisation d'un circuit hydraulique est qu'il permet de garantir, hors régulation ABS (qui n'intervient pas lors des démarrages en côte), que la pression appliquée au niveau des étriers soit au moins égale à la pression maître-cylindre $P_{mc}$.

En effet, la pression aux étriers est pilotée par la fonction HSA uniquement lorsque la pression maître-cylindre $P_{mc}$ est inférieure à la pression enregistrée $P_{store}$, ce qui permet d'éviter tout freinage intempestif qui pourrait causer des problèmes de sécurité.

Néanmoins, la fonction HSA ne pilote la pression sur les étriers que si la valeur de la pression maître-cylindre $P_{mc}$ est inférieure à la valeur de l'information enregistrée $P_{store}$, grâce à la fermeture d'électrovannes dites d'isolement.

Par ailleurs, les vitesses de desserrage des freins sont paramétrables et varient selon les conditions de desserrage des freins. Par exemple, lorsque l'automate desserre les freins alors que les conditions de décollage n'ont pas été réunies avant la fin de la temporisation (cas de la première variante), la vitesse de desserrage est plus petite que lorsque l'automate effectue le démarrage en côte. Et cette progression du desserrage des freins permet en outre un décollage plus doux pour l'usager.

Enfin, le fait de fonder la mesure du couple transmis $C_T$ par l'embrayage non pas sur un calcul, par exemple à partir du couple moteur, mais sur l'estimation du couple transmis par apprentissage de la cartographie de l'embrayage, permet d'obtenir un procédé et un dispositif peu sensibles au vieillissement, à l'usure et aux dispersions de fabrication de l'embrayage.

Bien entendu, la présente invention n'est nullement limitée aux formes de réalisation décrites ci-dessus, mais l'homme du métier saura y apporter de nombreuses variantes ou modifications.

**Revendications**

1. Procédé d'assistance d'un usager pour les manoeuvres en côte de son véhicule comprenant un système de freinage et une commande électronique de freinage, équipé d'au moins un capteur de pression maître-cylindre, et dont la pression sur chaque étrier du véhicule peut être contrôlée, le procédé comprenant les étapes consistant à :

(a) déterminer le rapport de vitesse engagé

(b) estimer le couple transmis ($C_T$) par l'embrayage en fonction du rapport de vitesse engagé,

(c) enregistrer une information ($P_{store}$) correspondant à la valeur de la pression maître-cylindre ($P_{mc}$) résultant de l'actionnement par un usager de la pédale de frein,

(d) mettre à jour l'information enregistrée ($P_{store}$) correspondant à la valeur de la pression maître-cylindre, lorsque l'usager ré-actionne la pédale de frein en appuyant davantage dessus ou en la relâchant partiellement,

e) déterminer l'inclinaison de la pente ($\theta_{pente}$) dans laquelle est arrêté le véhicule ;

lorsque l'usager relâche complètement la pédale de frein, le système de freinage maintient, pendant une durée déterminée, la pression sur les étriers en fonction d'une consigne de pression égale à la valeur de la dernière information enregistrée ($P_{store}$), et en ce que pendant la durée déterminée le système commande le desserrage des freins lorsque les conditions de décollage déterminées sont remplies, le système commandant également le desserrage des freins lorsque les conditions de décollage déterminées ne sont pas remplies à la fin de la durée déterminée définie par le système, , l'une des conditions de décollage étant qu'un rapport de vitesse soit engagé, une autre condition étant que ledit rapport de vitesse engagé soit cohérent avec ladite inclinaison de la pente, la cohérence entre ledit rapport de vitesse engagé et la pente étant établie lorsque le rapport de vitesse engagé permet au véhicule de monter la pente, une autre condition étant que le couple transmis ($C_T$) par l'embrayage soit supérieur au couple seuil ($C_{T\_seuil}$) de décollage, **caractérisé en ce que** le système permet le desserrage des freins lorsque les conditions de décollage n'ont pas été réunies avant la fin de ladite durée déterminée, et **en ce que** la vitesse de desserrage de freins lorsque les conditions de décollage n'ont pas été réunies avant la fin de ladite durée déterminée est inférieure à la vitesse de desserrage lorsque les conditions de décollage ont été réunies avant la fin de ladite durée déterminée.

2. Procédé selon la revendication précédente, **caractérisé en ce que** pour déterminer l'inclinaison la pente ($\theta_{pente}$) dans laquelle est arrêté le véhicule, on mesure de l'inclinaison de la pente $\theta_{pente}$ avec un capteur de pente (2).

3. Procédé selon la revendication 1, **caractérisé en ce que** ledit couple seuil ($C_{T\_seuil}$) de décollage est égal à $m.g.sin(\theta_{pente}).r(b).\rho_{roues}$ où

- m est la masse du véhicule,
- *g* est la gravité,
- $\theta_{pente}$ est l'inclinaison de la pente,
- *r(b)* est le rapport de vitesse engagé, correspondant à la position (b) du levier de vitesse, et
- $\rho_{roues}$ est le rayon sous charge des roues du véhicule.

4. Procédé selon l'une des revendications précédentes, **caractérisé en ce que** la vitesse de desserrage est paramétrable.

5. Procédé selon l'une des revendications précédentes, **caractérisé en ce que** le système de freinage est un bloc hydraulique de type contrôle dynamique de stabilité (ESP).

6. Dispositif d'assistance d'un usager au démarrage en côte d'un véhicule comprenant :

- un système de freinage alimenté par une force extérieure et une commande électronique de freinage, équipé d'au moins un capteur de pression maître-cylindre, la pression sur chaque étrier du véhicule pouvant être contrôlée,
- des moyens pour déterminer le rapport de vitesse engagé,
- des moyens pour estimer le couple transmis à l'embrayage, en fonction du rapport de vitesse engagé,
- des moyens pour enregistrer la valeur de la pression maître-cylindre ($P_{mc}$) résultant de l'actionnement par un usager de la pédale de frein, et, le cas échéant, mettre à jour la valeur de la pression maître-cylindre enregistrée ($P_{store}$), des moyens pour déterminer l'inclinaison de la pente ($\theta_{pente}$) dans laquelle est arrêté le véhicule ;

le dispositif maintenant, lorsque l'usager relâche complètement la pédale de frein, , pendant une durée déterminée, la pression sur les étriers en fonction d'une pression de consigne égale à la valeur maximale enregistrée ($P_{store}$) de la pression maître-cylindre, le dispositif étant tel que pendant la durée déterminée le système commande le desserrage des freins lorsque les conditions de décollage déterminées sont remplies, le système commandant également le desserrage des freins lorsque les conditions de décollage déterminées ne sont pas remplies à la fin de la durée déterminée définie par le système, l'une des conditions de décollage étant qu'un rapport de vitesse soit engagé, une autre condition étant que ledit rapport de vitesse engagé soit cohérent avec ladite inclinaison de la pente, la cohérence entre ledit rapport de vitesse engagé et la pente étant établie lorsque le rapport de vitesse engagé permet au véhicule de monter la pente, une autre condition étant que le couple transmis ($C_T$) par l'embrayage soit supérieur au couple seuil ($C_{T\_seuil}$) de décollage, **caractérisé en ce que** le système permet le desserrage des freins lorsque les conditions de décollage n'ont pas été réunies avant la fin de la durée déterminée et **en ce que** la vitesse de desserrage de freins lorsque les conditions de décollage n'ont pas été réunies avant la fin de ladite durée déterminée est inférieure à la vitesse de desserrage lorsque les conditions de décollage ont été réunies avant la fin de ladite durée déterminée..

7. Dispositif d'assistance selon la revendication précédente, **caractérisé en ce qu'**il ne pilote la pression aux étriers que lorsque celle-ci est inférieure à la pression maître-cylindre enregistrée ($P_{store}$) par les moyens d'enregistrement au cours d'un procédé selon l'une des revendications 1 à 5.

8. Véhicule comprenant un système de freinage et une commande électronique de freinage, équipé d'au moins un capteur de pression maître-cylindre, la pression sur chaque étrier du véhicule pouvant être contrôlée, **caractérisé en ce qu'**il comprend un dispositif d'assistance selon l'une des revendications 6 ou 7.

**Patentansprüche**

1. Verfahren zur Unterstützung eines Benutzers bei den Manövern seines Fahrzeugs am Berg, das ein Bremssystem und eine elektronische Bremssteuerung enthält, ausgestattet mit mindestens einem Hauptzylinder-Drucksensor, und bei dem der Druck auf jeden Bremssattel des Fahrzeugs kontrolliert werden kann, wobei das Verfahren die Schritte enthält, die darin bestehen:

   (a) Bestimmen des eingelegten Gangs,
   (b) Schätzen des von der Kupplung übertragenen Drehmoments ($C_T$) abhängig vom eingelegten Gang,
   (c) Speichern einer Information ($P_{store}$) entsprechend dem Wert des Hauptzylinderdrucks ($P_{mc}$), der aus der Betätigung des Bremspedals durch einen Benutzer resultiert,
   (d) Aktualisieren der gespeicherten Information ($P_{store}$) entsprechend dem Wert des Hauptzylinderdrucks, wenn der Benutzer das Bremspedal erneut betätigt, indem er stärker darauf drückt oder es teilweise loslässt,
   e) Bestimmen der Neigung des Hangs ($\theta_{pente}$),

an dem das Fahrzeug angehalten ist;

wenn der Benutzer das Bremspedal vollständig loslässt, hält das Bremssystem während einer bestimmten Dauer den Druck auf die Bremssättel abhängig von einem Drucksollwert gleich dem Wert der letzten gespeicherten Information ($P_{store}$) aufrecht, und dass während der bestimmten Dauer steuert das System das Lösen der Bremsen, wenn die bestimmten Startbedingungen erfüllt sind, wobei das System ebenfalls das Lösen der Bremsen steuert, wenn die bestimmten Startbedingungen am Ende der durch das System definierten bestimmten Dauer nicht erfüllt sind,

wobei eine der Startbedingungen ist, dass ein Gang eingelegt ist, eine andere Bedingung ist, dass der eingelegte Gang mit der Hangneigung kohärent ist, wobei die Kohärenz zwischen dem eingelegten Gang und dem Hang hergestellt ist, wenn der eingelegte Gang es dem Fahrzeug ermöglicht, den Hang hinaufzufahren, wobei eine andere Bedingung ist,

dass das von der Kupplung übertragene Drehmoment ($C_T$) höher als das Start-Schwelldrehmoment ($C_{T\_seuil}$) ist,

**dadurch gekennzeichnet, dass** das System das Lösen der Bremsen erlaubt, wenn die Startbedingungen nicht vor dem Ende der bestimmten Dauer erfüllt wurden, und dass die Bremslösegeschwindigkeit,

wenn die Startbedingungen nicht vor dem Ende der bestimmten Dauer erfüllt wurden, niedriger ist als die Lösegeschwindigkeit, wenn die Startbedingungen vor dem Ende der bestimmten Dauer erfüllt wurden.

2. Verfahren nach dem vorhergehenden Anspruch, **dadurch gekennzeichnet, dass** zur Bestimmung der Neigung des Hangs ($\theta_{pente}$), an dem das Fahrzeug angehalten ist, die Neigung des Hangs $\theta_{pente}$ mit einem Hangsensor (2) gemessen wird.

3. Verfahren nach Anspruch 1, **dadurch gekennzeichnet, dass** das Start-Schwelldrehmoment ($C_{T\_seuil}$) gleich $m.g.\sin(\theta_{pente}).r(b).\rho_{roues}$ ist, wobei

   • m die Masse des Fahrzeugs ist,
   • g die Schwerkraft ist,
   • $\theta_{pente}$ die Neigung des Hangs ist,
   • r (b) der eingelegte Gang ist, entsprechend der Stellung (b) des Ganghebels, und
   • $\rho_{roues}$ der Radius unter Last der Räder des Fahrzeugs ist.

4. Verfahren nach einem der vorhergehenden Ansprüche, **dadurch gekennzeichnet, dass** die Lösegeschwindigkeit parametrierbar ist.

5. Verfahren nach einem der vorhergehenden Ansprüche, **dadurch gekennzeichnet, dass** das Bremssystem ein Hydraulikblock von der Art Elektronisches Stabilitätsprogramm (ESP) ist.

6. Vorrichtung zur Unterstützung eines Benutzers beim Anfahren eines Fahrzeugs am Berg, die enthält:

- ein von einer äußeren Kraft und einer elektronischen Bremssteuerung versorgtes Bremssystem, das mit mindestens einem Hauptzylinder-Drucksensor ausgestattet ist, wobei der Druck auf jeden Bremssattel des Fahrzeugs kontrolliert werden kann,
- Einrichtungen zur Bestimmung des eingelegten Gangs,
- Einrichtungen zur Schätzung des an die Kupplung übertragenen Drehmoments abhängig vom eingelegten Gang,
- Einrichtungen zum Speichern des Werts des Hauptzylinderdrucks ($P_{mc}$) resultierend aus der Betätigung des Bremspedals durch einen Benutzer, und ggf. Aktualisieren des Werts des gespeicherten Hauptzylinderdrucks ($P_{store}$), Einrichtungen zur Bestimmung der Neigung des Hangs ($\theta_{pente}$), an dem das Fahrzeug angehalten ist;

wobei die Vorrichtung, wenn der Benutzer das Bremspedal vollständig loslässt, während einer bestimmten Dauer den Druck auf die Bremssattel abhängig von einem Solldruck gleich dem maximalen gespeicherten Wert ($P_{store}$) des Hauptzylinderdrucks aufrechthält, wobei die Vorrichtung so ist, dass während der bestimmten Dauer das System das Lösen der Bremsen steuert, wenn die bestimmten Startbedingungen erfüllt sind, wobei das System ebenfalls das Lösen der Bremsen steuert, wenn die Startbedingungen am Ende der vom System definierten bestimmten Dauer nicht erfüllt sind, wobei eine der Startbedingungen ist, dass ein Gang eingelegt ist, wobei eine andere Bedingung ist, dass der eingelegte Gang mit der Neigung des Hangs kohärent ist, wobei die Kohärenz zwischen dem eingelegten Gang und dem Hang hergestellt ist, wenn der eingelegte Gang es dem Fahrzeug erlaubt, den Hang hinaufzufahren, wobei eine andere Bedingung ist, dass das von der Kupplung übertragene Drehmoment ($C_T$) größer als das Start-Schwelldrehmoment ($C_{T\_seuil}$) ist, **dadurch gekennzeichnet, dass** das System das Lösen der Bremsen erlaubt, wenn die Startbedingungen nicht vor dem Ende der bestimmten Dauer erfüllt wurden, und dass die Bremslösegeschwindigkeit, wenn die Startbedingungen nicht vor dem Ende der bestimmten Dauer erfüllt wurden, niedriger ist als die Lösegeschwindigkeit, wenn die Startbedingungen vor dem Ende der bestimmten Dauer erfüllt wurden.

7. Unterstützungsvorrichtung nach dem vorhergehenden Anspruch, **dadurch gekennzeichnet, dass** sie den Druck an den Bremssätteln nur steuert, wenn dieser niedriger ist als der von den Speichereinrichtungen während eines Verfahrens nach einem der Ansprüche 1 bis 5 gespeicherte Hauptzylinderdruck ($P_{store}$).

8. Fahrzeug, das ein Bremssystem und eine elektronische Bremssteuerung enthält, ausgestattet mit mindestens einem Hauptzylinder-Drucksensor, wobei der Druck auf jeden Bremssattel des Fahrzeugs kontrolliert werden kann, **dadurch gekennzeichnet, dass** es eine Unterstützungsvorrichtung nach einem der Ansprüche 6 oder 7 enthält.

## Claims

1. Hill start assistance method to assist a user in manoeuvring his vehicle on a hill, comprising a braking system and an electronic brake control, equipped with at least one master cylinder pressure sensor and in which the pressure on each caliper of the vehicle can be controlled, the method comprising the steps consisting in:

(a) determining which gear ratio is engaged,
(b) estimating the torque ($C_T$) transmitted by the clutch according to the gear ratio engaged,
(c) recording an item of information ($P_{store}$) corresponding to the value of the master cylinder pressure ($P_{mc}$) resulting from user actuation of the brake pedal,
(d) updating the recorded information ($P_{store}$) corresponding to the value of the master cylinder pressure when the user re-actuates the brake pedal by depressing it further or by partially releasing it,
(e) determining the inclination of the gradient ($\theta_{gradient}$) on which the vehicle has stopped;

when the user completely releases the brake pedal, the braking system, for a set period of time, maintains the pressure on the calipers as a function of a pressure setpoint equal to the value of the last recorded piece of information ($P_{store}$), and in that for said period of time, the system commands the releasing of the brakes when the set pull-away conditions are met, the system also commanding the release of the brakes when the set pull-away conditions are not met, at the end of the set period of time defined by the system,

one of the pull-away conditions being that a gear ratio be engaged, another condition being that said gear ratio engaged be consistent with said inclination of the gradient, consistency between said gear ratio engaged and the gradient being established when the gear ratio engaged allows the vehicle to climb the gradient, another condition being that the torque ($C_T$) transmitted by the clutch be greater than the threshold pull-away torque ($C_{T\_thresh}$), **characterized in that** the system allows the brakes to be released when the pull-away conditions have not been satisfied before the end of said set period of time, and **in that** the rate at which the brakes are released when the pull-away conditions have not been met before the end of said set period of time is lower than the rate of release when the pull-away conditions have been met before the end of said set period of time.

2. Method according to the preceding claim, **characterized in that**, in order to determine the inclination of the gradient ($\theta_{gradient}$) on which the vehicle has stopped, the inclination of the gradient ($\theta_{gradient}$) is measured using a gradient sensor (2).

3. Method according to Claim 1, **characterized in that** said threshold pull-away torque ($C_{T\_thresh}$) is equal to m. g. sin ($\theta_{gradient}$) r (b).$\rho_{wheels}$
where

- m is the mass of the vehicle,
- g is gravity,
- $\theta_{gradient}$ is the inclination of the gradient,
- r(b) is the gear ratio engaged, corresponding to the position (b) of the gear lever, and
- $\rho_{wheels}$ is the laden radius of the wheels of the vehicle.

4. Method according to one of the preceding claims, **characterized in that** the rate of brake release can be parametrized.

5. Method according to one of the preceding claims, **characterized in that** the braking system is a hydraulic unit of the dynamic stability control (ESP) type.

6. Hill start assistance device for a vehicle, comprising:

- a braking system powered by an external force and an electronic brake control, equipped with at least one master cylinder pressure sensor, it being possible for the pressure on each caliper of the vehicle to be controlled,
- means for determining which gear ratio is engaged,
- means for estimating the torque transmitted to the clutch according to the gear ratio engaged,
- means for recording the value of the master cylinder pressure ($P_{mc}$) resulting from user actuation of the brake pedal and, as appropriate, updating the recorded master cylinder pressure value ($P_{store}$),

- means for determining the inclination of the gradient ($\theta_{gradient}$) on which the vehicle has stopped;

the device, when the user completely releases the brake pedal, maintaining for a set period of time, the pressure on the calipers as a function of a pressure setpoint equal to the maximum recorded value ($P_{store}$) of the master cylinder pressure, the device being such that for the set period of time, the system commands the release of the brakes when the set pull-away conditions are met, the system also commanding the release of the brakes when the set pull-away conditions are not met at the end of the set period of time defined by the system, one of the pull-away conditions being that a gear ratio be engaged, another condition being that said gear ratio engaged be consistent with said inclination of the gradient, consistency between said gear ratio engaged and the gradient being established when the gear ratio engaged allows the vehicle to climb the slope, another condition being that the torque ($C_T$) transmitted by the clutch be greater than the threshold pull-away torque ($C_{T\_thresh}$), **characterized in that** the system allows the brakes to be released when the pull-away conditions have not been met before the end of the set period of time and **in that** the rate of brake release when the pull-away conditions have not been met before the end of said set period of time is lower than the rate of release when the pull-away conditions have been met before the end of said set period of time.

7. Assistance device according to the preceding claim, **characterized in that** it influences the pressure on the calipers only when this pressure is lower than the master cylinder pressure ($P_{store}$) recorded by the recording means during a method according to one of Claims 1 to 5.

8. Vehicle comprising a braking system and an electronic brake control, equipped with at least one master cylinder pressure sensor, it being possible for the pressure on each caliper of the vehicle to be controlled, **characterized in that** it comprises an assistance device according to either of Claims 6 and 7.

$P_{mc} = P_{store}$
estimation de $C_T$
calcul de $C_{T\_seuil}$

Pédales de freins enfoncée ET

$|v| \leqslant v_{min}$ ET

$P_{mc} \geqslant P_{mc\_seuil}$ ET
rapport engagé ET
rapport cohérent ET

$\omega \geqslant \omega_{min}$

Pression appliquée par
l'automate sur les étriers = 0

Pédale de freins lâchée
temps t = 0

(10) ⟶ (20) ⟵ (30)

Pédale réenfoncée

t ⩽ 10 secondes ET
rapport engagé ET
rapport cohérent ET
$C_T \geqslant C_{T\_seuil}$

OU

t > 10 secondes ET
rapport pas engagé OU
rapport pas cohérent OU
$C_T < C_{T\_seuil}$

## FIG.1

EP 2 137 043 B1

Détection
du rapport
de boîte

Estimation de lacourbe
d'embrayage

CAN
&
capteurs
dédiés

Elaboration
des signaux

Commande
de capture

Mise à jour
de la courbe

Courbe
d'embrayage

Décollage

Commande
de desserrage

Demande
desserrage

## FIG.2

5

6

2

1

3

4

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10242122
- EP 1410940 A
- DE 19621628
- WO 2004103785 A
- DE 102005
- DE 10063061
- FR 2828450